(19) **Europäisches Patentamt**

**European Patent Office**

**Office européen des brevets**

(11) Numéro de publication : **0 522 918 A1**

# (12) DEMANDE DE BREVET EUROPEEN

(21) Numéro de dépôt : **92401815.3**

(22) Date de dépôt : **26.06.92**

(51) Int. Cl.⁵ : **C01B 17/16,** C07B 59/00

(30) Priorité : **01.07.91 FR 9108174**

(43) Date de publication de la demande :
**13.01.93 Bulletin 93/02**

(84) Etats contractants désignés :
**BE CH DE GB LI**

(71) Demandeur : **COMMISSARIAT A L'ENERGIE ATOMIQUE**
**31-33, rue de la Fédération**
**F-75015 Paris (FR)**

(72) Inventeur : **Boullais, Claude**
**18, rue Louis Gaudry**
**F-92160 Antony (FR)**
Inventeur : **Noel, Jean-Pierre**
**1, Avenue du Moulin de la Planche**
**F-91120 Palaiseau (FR)**
Inventeur : **Riva, Michel**
**48, rue de la Fontaine**
**F-92260 Fontenay-aux-Roses (FR)**

(74) Mandataire : **Orès, Bernard et al**
**Cabinet ORES 6, Avenue de Messine**
**F-75008 Paris (FR)**

(54) **Procédé de préparation de sulfures et d'acides amines marqués au soufre 35.**

(57) L'Invention est relative à un procédé de préparation de sulfures marqués au soufre 35, à haute activité spécifique, lequel procédé est caractérisé en ce qu'il comprend :

— une étape au cours de laquelle on prépare un mélange réducteur comprenant de l'acide chlorhydrique, de l'acide iodhydrique et de l'acide hypophosphoreux, et l'on prétraite ledit mélange afin d'éliminer les ions sulfate présents dans celui-ci ;

— une étape au cours de laquelle l'on procède à la réduction, par ledit mélange, de sulfate marqué au soufre 35, et l'on récupère le sulfure marqué au soufre 35 obtenu à l'issue de cette réduction.

L'Invention est également relative à un procédé de préparation d'acides aminés ou de leurs dérivés marqués au soufre 35, dans lequel un sulfure marqué au soufre 35, obtenu conformément à l'Invnetion est utilisé comme substrat d'une réaction enzymatique.

L'invention est relative à un nouveau procédé de préparation de sulfures marqués au soufre 35, et à la préparation d'acides aminés et de leurs dérivés marqués au soufre 35, à haute activité spécifique.

Les acides aminés soufrés L-cystéine et L-méthionine jouent un rôle important dans de nombreux processus biologiques, et en particulier sont incorporés dans des protéines très diverses. L'initiation de la biosynthèse d'une chaîne polypeptidique nécessite la présence de L-méthionine ; la L-cystéine est nécessaire dans la formation des ponts disulfures qui stabilisent la structure tertiaire des protéines, et intervient également au site actif de nombreuses enzymes.

Les acides aminés soufrés marqués au soufre 35, et en particulier la méthionine, sont donc très fréquemment utilisés pour l'étude de processus biologiques. Pour cette utilisation, il est nécessaire de disposer de produits à haute activité spécifique, supérieure à 29,6 Tbq à 37 Tbq/mmole (800 à 1000 Ci/mmole).

Deux types de procédés permettant l'obtention de L-cystéine et de L-méthionine marquées au soufre 35, sont connus : la voie chimique, et la voie microbiologique.

Les procédés de synthèse par voie chimique sont peu utilisés actuellement, car leur rendement est faible ; ils nécessitent un appareillage important, de nombreuses étapes manipulatoires, et ne sont pas adaptés à la manipulation des très faibles quantités de réactifs qui sont utilisées pour la fabrication d'un produit final à très haute activité spécifique.

Par exemple, le procédé décrit dans la publication HEISE et MITTAG [Kernenergie, 8, 181-184 (1965)] aboutit à de la L-méthionine $^{35}$S dont l'activité spécifique est de 2775 Mbq/mmole (75 mCi/mmole).

La L-cystéine et la L-méthionine marquées au soufre 35, que l'on trouve actuellement dans le commerce sont préparées par la voie microbiologique.

Plusieurs publications décrivent ce procédé d'obtention ; à titre d'exemple on citera les travaux d'ALBAHARI et SKAKUN-TODOROVIC [Journal of labelled compounds and Radiopharmaceuticals, XIV, 5, 727-733 (1978)], de GRAHAM et STANLEY [Analytical Biochemistry 47, 505-513, (1972)], de BRETSCHER et SMITH [Analytical Biochemistry, 47, 310-312, (1972)].

Des microorganismes (levures ou bactéries) sont cultivés en milieu minimum, la seule source de soufre étant procurée par du sulfate de sodium ou d'ammonium, marqué au soufre 35, à haute activité spécifique.

Le soufre 35 est incorporé dans les protéines, qui sont ensuite hydrolysées et les acides aminés soufrés sont purifiés, à partir de l'hydrolysat, par chromatographie. Cette étape de chromatographie ne parvient toutefois pas à éliminer totalement la contamination par d'autres acides aminés non marqués (par exemple L-valine, L-leucine), ainsi que par la D-méthionine $^{35}$S.

Chacun de ces contaminants représente 2 à 3% de la préparation de L-méthionine $^{35}$S obtenue.

D'autre part, ce procédé de préparation est relativement long ; il faut au moins 24 heures pour que le soufre soit incorporé dans les protéines ; un autre délai de 24 heures est nécessaire pour que l'hydrolyse des protéines soit complète.

Or les préparations d'acides aminés marqués au soufre 35 doivent être renouvelées fréquemment, car la période de demi-vie du soufre 35 est relativement courte, et la L-méthionine $^{35}$S est peu stable chimiquement et s'oxyde très rapidement en L-méthionine sulfoxyde.

Il est donc particulièrement souhaitable de disposer d'une méthode simple et aisée à mettre en oeuvre, qui peut permettre de préparer ces composés à la demande.

Les Inventeurs, en cherchant à résoudre ce problème, ont orienté leurs travaux vers la mise au point d'une méthode de synthèse enzymatique.

Différentes voies métaboliques qui conduisent à la synthèse des acides aminés soufrés sont connues, ainsi que les enzymes qui interviennent à chacune des étapes de cette synthèse : pour revue d'ensemble, voir par exemple Methods in Enzymology, volume 143, (1987), Editeurs W.B. Jakoby and Griffith.

Le soufre organique de la cystéine et de la méthionine provient de soufre inorganique qui peut être assimilé par certains microorganismes et *in fine*, réduit sous forme de sulfures. Les sulfures réagissent avec la sérine ou l'homosérine (ou leurs dérivés O-acylés) pour donner la cystéine et l'homocystéine.

Différentes enzymes peuvent catalyser cette réaction : [pour revue détaillée, Cf. SODA, Methods in Enzymology 143 453-457 (1987)].

On peut citer par exemple l'O-acétylsérine sulfhydrylase, (EC.4.2.99.8), la cystathionine β-synthase (EC.4.2.1.22), l'O-acétyl homosérine (thiol) lyase (EC.4. 2.99.10) etc ...

Bien que ces enzymes soient connues et aient été purifiées, leur utilisation pour l'obtention d'acides aminés marqués au soufre 35, et à haute activité spécifique, n'a jamais été proposée.

En effet, bien que les réactions catalysées par ces enzymes soient aisément réalisables in-vitro en présence de substrats non radio-marqués, et lorsque l'on n'a aucune exigence particulière quant au rendement de la réaction ou à la qualité du produit final, il n'en va toutefois pas de même lorsque ces réactions doivent être effectuées en présence de substrats radiomarqués, et en assurant au produit final une activité spécifique élevée, ainsi qu'une grande pureté chimique et radiochimique.

Les problèmes à résoudre pour parvenir à ce but sont nombreux, car il faut limiter au maximum le nombre d'étapes nécessaires, chaque étape devant, en outre, être compatible avec l'étape précédente et la suivante.

Ce problème principal qui doit être résolu pour permettre la mise en oeuvre de la réaction enzymatique avec les meilleurs résultats, est celui de l'utilisation d'un substrat approprié marqué, à haute activité spécifique.

Le problème ne se pose pas dans les méthodes d'obtention d'acides aminés marqués par voie bactériologique, car le soufre 35 utilisé dans ces méthodes, obtenu à partir de l'irradiation du chlorure de potassium selon la réaction $^{35}Cl(n,p)^{35}S$, est purifié sous forme de sulfate assimilable par les bactéries.

Or, les enzymes synthétisant les acides aminés soufrés utilisent comme substrat les sulfures, et non les sulfates. Il est donc nécessaire de procéder, préalablement à la réaction enzymatique, à la réduction du sulfate en sulfure. Or, cette étape peut conduire à une diminution importante de l'activité spécifique.

Les Inventeurs ont maintenant sélectionné un mélange réducteur, et mis au point des conditions de réaction permettant la réduction du sulfate en sulfure avec un bon rendement, et sans perte d'activité spécifique.

La présente Invention a pour objet un procédé de préparation de sulfures marqués au soufre 35, à haute activité spécifique, lequel procédé est caractérisé en ce qu'il comprend :

- une étape au cours de laquelle on prépare un mélange réducteur comprenant de l'acide chlorhydrique, de l'acide iodhydrique et de l'acide hypophosphoreux, et l'on prétraité ledit mélange afin d'éliminer les ions sulfate présents dans celui-ci ;

- une étape au cours de laquelle l'on procède à la réduction, par ledit mélange, de sulfate marqué au soufre 35, et l'on récupère le sulfure marqué au soufre 35 obtenu à l'issue de cette réduction.

Au sens de la présente Invention, on entend par sulfure, le sulfure d'hydrogène, ou un de ses sels (par exemple sulfure métallique) et par sulfate, l'acide sulfurique ou un de ses sels.

Selon un mode préféré de mise en oeuvre du procédé conforme à l'Invention, le mélange réducteur est prétraité par chauffage sous courant d'un gaz inerte (azote, hélium, etc...). Les ions sulfate présents dans le mélange réducteur sont réduits et entraînés, sous forme de sulfure d'hydrogène, par le courant de gaz inerte.

Selon une disposition préférée de ce mode de mise en oeuvre, ledit mélange réducteur est prétraité par chauffage pendant 30 minutes à 3 heures, à une température comprise entre 90 et 150 °C.

Selon un autre mode mise en oeuvre préféré du procédé conforme à l'Invention, ledit mélange comprend entre 40 et 60% en volume d'acide iodhydrique pur, entre 20 et 30% en volume d'acide chlorhydrique pur, entre 20 et 30% en volume d'eau, et entre 10 et 15% d'acide hypophosphoreux en solution à 50% (P/P) dans l'eau.

Selon encore un autre mode de mise en oeuvre préféré du procédé conforme à l'Invention, on réduit le sulfate marqué au soufre 35, par chauffage sous courant de gaz inerte, en présence du mélange réducteur prétraité, et l'on récupère le sulfure marqué au soufre 35 qui se dégage, sous forme de sulfure d'hydrogène.

Selon une disposition préférée de ce mode de mise en oeuvre, le sulfure marqué au soufre 35 est recueilli par barbotage du sulfure d'hydrogène dans une solution aqueuse d'une base forte, le rapport molaire base forte/soufre 35, étant compris entre 5/1 et 80/1.

Le sulfure marqué au soufre 35 obtenu à l'issue de la réduction, possède la même activité spécifique que le sulfate de départ. Il peut être utilisé comme substrat pour une réaction enzymatique. Dans ce but, il peut être ajouté au milieu réactionnel, soit sous forme du sel, formé lors du barbotage, de la base forte précitée, soit directement, par dégagement du sulfure d'hydrogène dans le milieu réactionnel.

La présente Invention a également pour objet un procédé de préparation d'acides aminés marqués au soufre 35, lequel procédé est caractérisé en ce qu'il comprend une étape au cours de laquelle on procède à la sulfhydrylation de la sérine ou de l'homosérine, ou de l'un de leurs dérivés O-acylés, par un sulfure marqué au soufre 35 obtenu par le procédé conforme à l'Invention, en présence d'une enzyme apte à catalyser ladite réaction de sulfhydrylation.

Comme il a été dit plus haut, différentes enzymes peuvent utiliser les sulfures comme substrat pour la synthèse d'acides aminés soufrés.

Selon un mode de mise en oeuvre préféré de la présente Invention, l'on utilise l'enzyme O-acétyl- L-homosérine sulfhydrylase, en présence d'O-acétyl-0 L-sérine ou d'O-acétyl-L-homosérine.

Cette enzyme peut être purifiée à partir de S. Cerevisiae selon la méthode décrite par YAMAGATA [Methods in Enzymology 143, 478-483, (1987)]. Elle peut également être obtenue à partir d'autres microorganismes la contenant [PASZEWSKI et GRABSKI, Acta Biochimica Polonica, 23, 321-324 (1976)].

Cette enzyme également dénommée O-acétyl-L-sérine-O-Acétyl-L-homosérine sulfhydrylase catalyse les réactions suivantes :

O-acétyl-L-sérine + $H_2S$ → L-cystéine + $CH_3$ COOH
O-Acétyl-L-homosérine + $H_2S$ → L-homocystéine + $CH_3$ COOH.

Selon un autre mode de mise en oeuvre préféré de la présente Invention, on purifie le produit de la réaction enzymatique, marqué au soufre 35, par chromatographie en phase inverse du mélange réactionnel.

Selon un autre mode de mise en oeuvre préféré de la présente Invention, l'on procède, pour obtenir de la méthionine marquée au soufre 35, à la méthylation de l'homocystéine obtenue à l'issue de la réaction enzymatique, préalablement à la purification par chromatographie.

Cette méthylation peut être effectuée de manière connue en elle-même, par voie chimique, par exemple par l'iodure de méthyle, ou par voie enzymatique par exemple, en utilisant l'homocystéine S-méthyltransférase décrite par SHAPIRO et al. [The Journal of Biological Chemistry, 239, 5, 1551-1556,(1964)].

Si l'on souhaite préparer de la L-cystine $^{35}$S ou la L-homocystine $^{35}$S, l'on procède à l'oxydation de L-cystéine $^{35}$S ou de la L-homocystéine $^{35}$S obtenue à l'issue de la réaction enzymatique.

La présente Invention sera mieux comprise à l'aide du complément de description qui va suivre, qui se réfère à un exemple de mise en oeuvre du procédé conforme à l'Invention.

Il va de soi, toutefois, que cet exemple est donné uniquement à titre d'illustration de l'objet de l'Invention, dont il ne constitue en aucune manière une limitation.

### EXEMPLE DE SYNTHESE DE LA METHIONINE $^{35}$S, PAR LE PROCEDE CONFORME A L'INVENTION

### 1) REDUCTION DE L'ACIDE SULFURIQUE $^{35}$S OU DE L'UN DE SES SELS, EN HYDROGENE SULFURE$^{35}$S

L'acide sulfurique $^{35}$S d'activité spécifique de 46,2 Tbq/mmole (1250 Ci/mmole), ou l'un de ses sels, obtenu de façon connue en elle-même, par exemple par irradiation du KCl selon la réaction nucléaire $^{35}$Cl(n,p)$^{35}$S, est réduit quantitativement en hydrogène sulfuré $^{35}$S en présence d'un mélange réducteur dont la composition est la suivante :

- 5,3 ml d'eau distillée et désionisée (18 mégohms)
- 4,7 ml d'acide chlorhydrique (d = 1,19)
- 10 ml d'acide iodhydrique (d = 1,7)
- 2,5 ml d'acide hypophosphoreux en solution à 50%

Après préparation du mélange réducteur, 5 ml de celui-ci sont introduits dans un réacteur sous atmosphère inerte d'hélium.

Dans ces conditions les ions sulfate présents dans les réactifs constituant ce mélange, sont réduits en ions sulfures et éliminés du milieu au fur et à mesure de leur formation sous forme d'un gaz, (H$_2$S), par chauffage vers 110°C pendant 45 mn sous courant d'hélium à un débit de 0,9 l/h. La solution est alors refroidie à température ambiante. Les ions sulfate sont ainsi éliminés à plus de 99 %.

Après refroidissement, 200 µl (14,86 Gbq = 400 mCi) de la solution contenant l'acide sulfurique $^{35}$S (2 Ci/ml) ou l'un de ses sels, sont introduits dans le mélange réducteur prétraité, et sont traités par chauffage sous courant d'hélium, comme décrit ci-dessus, à un débit d'hélium de 0,4 l/h.

L'hydrogène sulfuré $^{35}$S est obtenu avec une activité spécifique identique à celle de l'acide sulfurique de départ, et est recueilli dans une solution aqueuse refroidie dans la glace, contenant de la soude (20 µmoles de soude pour environ 0,3 µmole de $^{35}$S). Le rendement de la réaction de réduction est de 99,8% ; c'est-à-dire qu'on ne retrouve dans le mélange réducteur, à l'issue de la réaction, que 0,2% de l'activité introduite dans le mélange réactionnel. D'autre part, 85% de l'activité totale de l'acide sulfurique $^{35}$S sont présents dans la solution de soude ayant servi au piégeage de l'hydrogène sulfuré.

### 2) REACTION ENZYMATIQUE

Après addition de 5µl de Tris-HCl (1 M) pH = 7,8 dans la solution contenant le sulfure de sodium $^{35}$S, celle-ci est neutralisée par une solution d'acide chlorhydrique diluée (0,1 N), jusqu'à pH = 7,8.

Les produits suivants nécessaires, pour la réaction enzymatique sont alors introduits dans la solution radioactive :

- 1 µl de pyridoxal phosphate (5,3 mg/ml)
- 100 µl de O-acétyl L-homosérine (16,1 mg/ml)
- 2 µl de dithiothréitol (154 mg/ml)
- 5 µl d'une préparation à 2,4 mg de protéine/ml, d'enzyme O-acétyl L-homosérine sulfhydrylase (Activité spécifique : 0,135 µmol d'homocystéine/mn/mg de protéine).

Le volume total du mélange réactionnel est d'environ 1 ml.

Le pH est vérifié et ajusté à 7,8 si nécessaire avant introduction de l'enzyme.

La O-acétyl-L-homosérine sulfhydrylase a été purifiée selon la méthode décrite par YAMAGATA (publication précitée) à partir d'une souche de *Saccharomyces cerevisiae*, par précipitation fractionnée en milieu contenant du sulfate d'ammonium puis par passage sur colonne de DEAE-cellulose. Cette enzyme est relativement stable et peut être conservée au froid à -80°C durant de nombreux mois sans perte importante de son activité.

Après addition de l'enzyme, le milieu réactionnel est laissé à température ambiante durant 1 heure.

### 3) REACTION DE METHYLATION

Après la réaction enzymatique, 5 µl d'iodure de méthyle pur, agent de méthylation, puis 25 µl de soude 1N sont ajoutés directement au milieu réactionnel. Celui-ci est laissé à température ambiante pendant 30 minutes.

## 4) PURIFICATION DE LA L-METHIONINE³⁵S

Après la réaction de méthylation, le milieu réactionnel est directement injecté sans traitement préalable, sur une colonne semi-préparative de 25 cm de longueur (ZORBAX C18) contenant un support phase inverse, muni d'une précolonne de 2 cm de longueur contenant le même support. L'éluant utilisé est de l'eau distillée et désionisée (18 méghoms), à un débit de 3ml/mn. On procède sous atmosphère d'hélium. La fraction radioactive contenant la L-méthionine ³⁵S à haute activité spécifique est collectée à froid sous atmosphère d'argon.

La méthionine ³⁵S est éluée au bout de 8 à 10 minutes, dans les conditions de chromatographie indiquées ci-dessus.

L'analyse de la fraction contenant la L-méthionine ³⁵S par diverses techniques chromatographiques montre qu'elle ne contient pas d'autres acides aminés marqués ou non marqués.

Le rendement en L-méthionine ³⁵S purifiée à partir de l'acide sulfurique ³⁵S est de l'ordre de 10 à 15% de l'activité totale de l'acide sulfurique soit 40 à 60 mCi. L'activité spécifique de la L-méthionine purifiée est identique à celle de l'acide sulfurique de départ.

## Revendications

1) Procédé de préparation de sulfures marqués au soufre 35, à haute activité spécifique, lequel procédé est caractérisé en ce qu'il comprend :

- une étape au cours de laquelle on prépare un mélange réducteur comprenant de l'acide chlorhydrique, de l'acide iodhydrique et de l'acide hypophosphoreux, et l'on prétraité ledit mélange afin d'éliminer les ions sulfate présents dans celui-ci ;

- une étape au cours de laquelle l'on procède à la réduction, par ledit mélange, de sulfate marqué au soufre 35, et l'on récupère le sulfure marqué au soufre 35 obtenu à l'issue de cette réduction.

2) Procédé selon la Revendication 1, caractérisé en ce que le mélange réducteur est prétraité par chauffage sous courant d'un gaz inerte.

3) Procédé selon la Revendication 2, caractérisé en ce que ledit mélange réducteur est prétraité par chauffage pendant 30 minutes à 3 heures, à une température comprise entre 90 et 150 °C.

4) Procédé selon l'une quelconque des Revendications 1 à 3, caractérisé en ce que ledit mélange comprend entre 40 et 60% en volume d'acide iodhydrique pur, entre 20 et 30% en volume d'acide chlorhydrique pur, entre 20 et 30% en volume d'eau, et entre 10 et 15% d'acide hypophosphoreux en solution à 50% (P/P) dans l'eau.

5) Procédé selon l'une quelconque des Revendications 1 à 4, caractérisé en ce que l'on réduit le sulfate marqué au soufre 35, par chauffage sous courant d'un gaz inerte, en présence du mélange réducteur prétraité et l'on récupère le sulfure marqué au soufre 35 qui se dégage, sous forme de sulfure d'hydrogène.

6) Procédé selon la Revendication 5, caractérisé en ce que le sulfure marqué au soufre 35 est recueilli par barbotage du sulfure d'hydrogène dans une solution aqueuse d'une base forte, le rapport molaire base forte/soufre 35, étant compris entre 5/1 et 80/1.

7) Procédé de préparation d'acides aminés ou de leurs dérivés marqués au soufre 35, lequel procédé est caractérisé en ce qu'il comprend une étape au cours de laquelle on procède à la sulfhydrylation de la sérine ou de l'homosérine, ou de l'un de leurs dérivés O-acylés, par un sulfure marqué au soufre 35, obtenu par le procédé selon l'une quelconque des Revendications 1 à 6, en présence d'une enzyme apte à catalyser ladite réaction de sulfhydrylation.

8) Procédé selon la Revendication 7, caractérisé en ce que l'on utilise l'enzyme O-acétyl-L-homosérine sulfhydrylase, en présence d'O-acétyl-L-sérine ou d'O-acétyl -L-homosérine.

9) Procédé selon l'une quelconque des Revendications 7 à 8, caractérisé en ce que l'on purifie le produit de la réaction enzymatique, marqué au soufre 35, par chromatographie en phase inverse du mélange réactionnel.

10) Procédé selon l'une quelconque des Revendications 7 à 9, caractérisé en ce que l'on procède, pour obtenir de la méthionine marquée au soufre 35, à la méthylation de l'homocystéine obtenue à l'issue de la réaction enzymatique, préalablement à la purification par chromatographie.

Office européen
des brevets

**RAPPORT DE RECHERCHE EUROPEENNE**

Numero de la demande

EP 92 40 1815

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl.5) |
| A | KERNENERGIE<br>vol. 6, no. 22, 1963,<br>pages 701 - 704<br>M. KUCHARSKI ET AL. 'Methode zur Herstellung von 35S-markierten Sulfiden von Natrium, Kalium, Cadmium und Eisen unmittelbar aus dem neutronenbestrahlten KCL-Target.'<br>* page 701, colonne de droite, dernier alinéa *<br>--- | 1,5 | C01B17/16<br>C07B59/00 |
| A | RADIOCHIMICA ACTA<br>vol. 6, no. 3, 1966,<br>pages 113 - 114<br>C. SUAREZ ET AL. 'Preparation of carrier-free 35SH2 through direct reduction of the (35SO4)2- contained in neutron irradiated KCl'<br>--- | | |
| A | RADIOISOTOPY<br>vol. 12, no. 6, 1971,<br>pages 1019 - 1027<br>L.C. VON ERICHSEN ET AL. 'Preparation and analytical control of H2(35)S of high specific activity.'<br>--- | | |
| A | SOVIET INVENTIONS ILLUSTRATED<br>Section Ch, Week 8806,<br>Derwent Publications Ltd., London, GB;<br>Class E, AN 88-041137<br>& SU-A-1 318 520 (V.M. NOVOPASHIN) 23 Juin 1987<br>* abrégé *<br>--- | | |
| A | US-A-2 970 893 (VILES)<br>--- | | |
| A | EP-A-0 181 061 (AMERSHAM INTERNATIONAL)<br>----- | | |

| | DOMAINES TECHNIQUES RECHERCHES (Int. Cl.5) |
|---|---|
| | C01B<br>C07B |

Le présent rapport a été établi pour toutes les revendications

| Lieu de la recherche | Date d'achèvement de la recherche | Examinateur |
|---|---|---|
| LA HAYE | 30 OCTOBRE 1992 | ZALM W.E. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P0402)